# EUROPEAN PATENT APPLICATION

(11) **EP 2 498 178 A1**
(43) Date of publication of application: **12.09.2012**
(21) Application number: 10827864.9
(22) Date of filing: 19.10.2010
(51) Int. Cl.: G06F 9/44

(54) **METHOD AND DEVICE FOR DEVELOPMENT ENVIRONMENT CONVERTING**

(30) Priority: 04.11.2009 CN 200910209497
(71) Applicant: ZTE Corporation, Shenzhen, Guangdong 518057 (CN)
(72) Inventor: YANG, Yi, Shenzhen Guangdong 518057 (CN)
(74) Representative: Quinterno, Giuseppe
(86) International application number: PCT/CN2010/077884
(87) International publication number: WO 2011/054250

(57) **Abstract**

A method and an apparatus for development environment conversion are provided. In accordance with the solution of the present invention, a rule of outputting compiling parameters is added in a makefile of an SDK; when inputting a command of converting a project from the SDK to an IDE, rules except the added rule in the makefile of the SDK are explained and executed by calling a Make tool, source files of the project are compiled, the added rule in the makefile of the SDK is explained and executed to output the compiling parameters related to a compiling process; and the compiler in the IDE automatically generates a makefile according to the compiling parameters to realize the conversion of the project from an SDK to an IDE. The workload of inputting the compiling parameters manually is omitted, the speed of outputting the compiling parameters is much faster than manually inputting the compiling parameters, and errors of manual inputting hardly occurs, so the time and workload of converting the project from an SDK to an IDE are highly reduced.

## Description

### Field of the invention

The present invention relates to the field of software development, and in particular to a method and an apparatus for development environment conversion.

### Background of the invention

Software Development Kit (SDK) and Integrated Development Environment (IDE) are two common development environments of mobile phone client software at present. In both the SDK and IDE, configuration for compiling of source files in a project are realized through a makefile, specifically, for numerous source files in the project which are stored in several directories respectively according to category, function and module, the configuration for compiling of the source files is realized by defining a series of rules in the makefile to specify which source files are required to be compiled first, which source files are required to be complied later and which source files are required to be recompiled and so on.

In the SDK, a user is supported to manually write the makefile by using command lines; while in the IDE, a user is provided with a visible interface to input compiling parameters, and a makefile is generated automatically, generally, manually writing a makefile is not supported in the IDE, namely, the makefile manually written in the SDK is not accepted by the IDE. Thus, when the user selects to use the SDK to develop a project at first and wants to convert into the IDE to continue the development in the development process, then it is required to input compiling parameters in the IDE to regenerate a makefile. However, if the project is relatively large and much development has been performed in the SDK, for large numbers of source files that has been written, the makefile regenerated will include a lot of rules, and correspondingly, the operation workload of inputting compiling parameters is extremely heavy, thus the time and workload required for realizing the conversion is extremely considerable.

### Summary of the invention

In view of the above, the present invention mainly provides a method and an apparatus for development environment conversion, which can greatly reduce the time and workload of converting a project from an SDK to an IDE.

To address the technical problem above, the technical solution of the present invention is realized as follows.

A method for development environment conversion is provided, a rule of outputting compiling parameters is added in a makefile of an SDK; when inputting a command of converting a project from the SDK to an IDE, a Make tool is called to explain and execute rules except the added rule in the makefile of the SDK, source files of the project are compiled, the added rule in the makefile of the SDK is explained and executed to output the compiling parameters related to a compiling process; and a compiler in the IDE generates a makefile according to the compiling parameters automatically.

After outputting the compiling parameters related to the compiling process, the method further comprises: the output compiling parameters are stored in a log file, and the log file is converted into an XML file through a PERL.

Before generating the makefile according to the compiling parameters automatically by the compiler in the IDE, the method further comprises: a wizard in the IDE reads in the XML file obtained by conversion, analyses the XML file to obtain the compiling parameters, and sends the compiling parameters to the compiler in the IDE.

An apparatus for development environment conversion comprises: a manual writing module, a command receiving module and a calling module configured in an SDK, a compiler configured in an IDE, wherein the manual writing module is used to add a rule of outputting compiling parameters in a makefile of the SDK; the command receiving module is used to receive a command input by a user of converting a project from the SDK to the IDE, and trigger the calling module; the calling module is used to call a Make tool to explain and execute rules except the added rule in the makefile of the SDK, compile source files of the project, explain and execute the added rule in the makefile of the SDK, and output the compiling parameters related to a compiling process; and the compiler is used to automatically generate a makefile according to the compiling parameters.

The apparatus also comprises: a storage and conversion module configured in the SDK, used to store the output compiling parameters into a log file, and convert the log file into an XML file though a PERL.

The apparatus also comprises: a wizard module configured in the IDE, used to read in the XML file obtained by conversion, analyze the XML file to obtain the compiling parameters, and send the compiling parameters to the compiler.

The above compiling parameters comprise: a compiling tool, a storage address of a dependency file, mutual relationship of dependency files, a name of an object file, and a storage address of the object file.

In accordance with the method and apparatus for development environment conversion provided in the present invention, a rule of outputting compiling parameters is added in the makefile of the SDK to output compiling parameters; the compiler in the IDE automatically generates a makefile according to the compiling parameters to realize the conversion of the project from an SDK to an IDE. The workload of inputting the compiling parameters manually is omitted, the speed of outputting the compiling parameters is much faster than manually inputting the compiling parameters, and errors of manual inputting hardly occurs, so the time and workload of converting the project from an SDK to an IDE are highly reduced.

### Brief description of the drawings

Fig. 1 is a flow chart of the realization of the method for development environment conversion in accordance with an embodiment of the present invention;
Fig. 2 is a schematic view of the structure of the apparatus for development environment conversion in accordance with an embodiment of the present invention.

### Detailed description of the embodiments

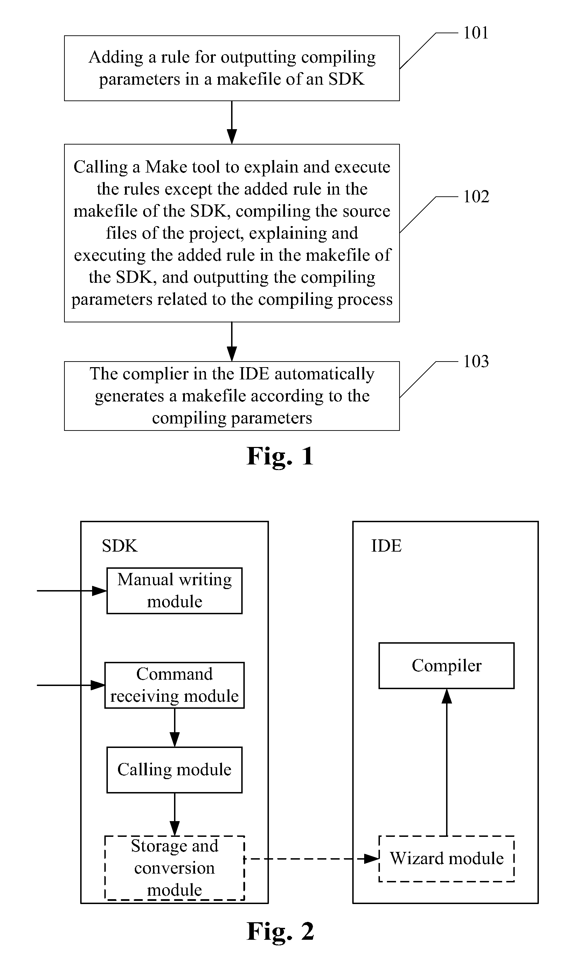

The flow of the realization of the method for development environment conversion in accordance with an embodiment of the present invention is as shown in Fig. 1, and specifically includes the following steps.

Step 1: a rule for outputting compiling parameters is added in a makefile of the SDK.

The codes which are able to realize the rule of outputting the compiling parameters will be taken as an example to illustrate how the outputting of the compiling parameters related to the compiling process is realized through the rule of outputting the compiling parameters:
infogen:
@echo Infogen!!!
echo Start logging...>$(IDE)
@echo. >> $ (IDE)
@echo. Project info...>>$ (IDE)
@echo FLAVOR@= =$(FLAVOR)>>$(IDE)
@echo COMPILER @== $(COMPILER)>>$(IDE)
@echo OSTYPE@==$(OSTYPE)>>$(IDE)
@echo PRJ-PATH@= =$(PRJ-PATH)>>$(IDE)
@echo DEFINE@= =$(DEFINE)>>$(IDE)
@echo STDINCLUDE@==$(STDINCLUDE)>>$(IDE)
@echo INCLUDE@==$(INCLUDE)>>$(IDE)
@echo CCFLAGS @==$(CCFLAGS)>>$(IDE)
@echo ASFLAGS@==$(ASFLAGS)>>$(IDE)
@echo ARFLAGS@==$(ARFLAGS)>>$(IDE)
@echo COMPLIST@==$(COMPLIST)>>$(IDE)

The codes above are executed independently as an object of the makefile, and the compiling parameters can be obtained by running the codes. For example, running "@echo FLAVOR@= = $(FLAVOR)>>$(IDE)" will output FLAVOR@== debug, namely the compiling tool output is "debug".

In the embodiment of the present invention, when a user inputs a command of converting a project from an SDK to an IDE, Step 2 and Step 3 are executed.

Step 2: a Make tool is called to explain and execute rules except the added rule in the makefile of the SDK, the source files of the project are compiled, the added rule in the makefile of the SDK is explained and executed to output the compiling parameters related to the compiling process.

The rules except the added rule in the makefile specify a compiling tool, dependency files, a mutual relationship of the dependency files, and a storage address of an object file and so on. The Make tool compiles the source files of the project according to the rules except the added rule in the makefile.

The compiling parameters herein include: a compiling tool, a storage address of a dependency file, a mutual relationship of dependency files, a name of an object file and a storage address of the object file. Each compiling parameter only includes the name of one object file, that is to say, each time when one object file is obtained during the compiling, one compiling parameter corresponding to the object file is output. Specifically, in the output compiling parameters, the compiling tool is the one used to obtain the object file; the compiling process for obtaining the object file can be described as: the dependency files indicated by their storage addresses are compiled based on the mutual relationship of the dependency files, namely obtain the object file, and the name of the object file and storage address of the object file are respectively the name and storage address of the object file.

In the above, after outputting the compiling parameters related to the compiling process, Step 102 also includes: the output compiling parameters are stored into a log file, and the log file is converted to an Extensible Markup Language (XML) file through a Practical Extraction and Report Language (PERL). Herein, the conversion of the log file to the XML file is to facilitate the analysis of compiling parameters therefrom.

Step 3: a complier in the IDE automatically generates a makefile according to the compiling parameters, and the conversion of the project from the SDK to IDE is completed and the conversion flow is finished.

Herein, the process that the compiler in the IDE automatically generates a makefile according to the compiling parameters includes: a wizard in the IDE reads in and analyzes the XML file obtained by conversion to obtain compiling parameters, and then sends them to the compiler in the IDE.

The structure of the apparatus for development environment conversion in accordance with an embodiment of the present invention is as shown in Fig. 2, including: a manual writing module, a command receiving module, a calling module configured in an SDK, and a compiler configured in an IDE; wherein
the manual writing module is used to add a rule of outputting compiling parameters in a makefile of the SDK;
the command receiving module is used to receive a command input by a user of converting a project from the SDK to the IDE, and trigger the calling module;
the calling module is used to call a Make tool to explain and execute rules except the added rule in the makefile of the SDK, compile source files of the project, explain and execute the added rule in the makefile of the SDK, and output the compiling parameters related to a compiling process; and
the compiler is used to automatically generate a makefile according to the compiling parameters.

The apparatus also comprises: a storage and conversion module configured in the SDK, used to store the output compiling parameters into a log file, and convert the log file into an XML file though a PERL.

The apparatus also comprises: a wizard module configured in the IDE, used to read in the XML file obtained by conversion, analyze the XML file to obtain the compiling parameters, and send the compiling parameters to the compiler.

The description above is just the preferable embodiments of the present invention, and not intended to limit the protection scope of the present invention.

## Claims

1. A method for development environment conversion, **characterized in that** a rule of outputting compiling parameters is added in a makefile of a Software Development Kit (SDK); when inputting a command of converting a project from the SDK to an Integrated Development Environment (IDE), the method further comprises:
calling a Make tool to explain and execute rules except the added rule in the makefile of the SDK, compiling source files of the project, explaining and executing the added rule in the makefile of the SDK to output the compiling parameters related to a compiling process; and
generating, by a compiler in the IDE, a makefile according to the compiling parameters automatically.

2. The method for development environment conversion according to Claim 1, **characterized in that** after outputting the compiling parameters related to the compiling process, the method further comprises:
storing the output compiling parameters in a log file, and converting the log file into an Extensible Markup Language (XML) file through a Practical Extraction and Report Language (PERL).

3. The method for development environment conversion according to Claim 2, **characterized in that** before generating the makefile according to the compiling parameters automatically by the compiler in the IDE, the method further comprises:
a wizard in the IDE reading in the XML file obtained by conversion, analyzing the XML file to obtain the compiling parameters, and sending the compiling parameters to the compiler in the IDE.

4. The method for development environment conversion according to Claim 1, 2, or 3, **characterized in that** the compiling parameters comprise: a compiling tool, a storage address of a dependency file, mutual relationship of dependency files, a name of an object file, and a storage address of the object file.

5. An apparatus for development environment conversion, **characterized by** comprising: a manual writing module, a command receiving module and a calling module configured in a Software Development Kit (SDK), a compiler configured in an Integrated Development Environment (IDE), wherein
the manual writing module is used to add a rule of outputting compiling parameters in a makefile of the SDK;
the command receiving module is used to receive a command input by a user of converting a project from the SDK to the IDE, and trigger the calling module;
the calling module is used to call a Make tool to explain and execute rules except the added rule in the makefile of the SDK, compile source files of the project, explain and execute the added rule in the makefile of the SDK, and output the compiling parameters related to a compiling process; and
the compiler is used to automatically generate a makefile according to the compiling parameters.

6. The apparatus for development environment conversion according to Claim 5, **characterized by** further comprising:
a storage and conversion module configured in the SDK, used to store the output compiling parameters into a log file, and convert the log file into an Extensible Markup Language (XML) file though a Practical Extraction and Report Language (PERL).

7. The apparatus for development environment conversion according to Claim 6, **characterized by** further comprising:
a wizard module configured in the IDE, used to read in the XML file obtained by conversion, analyze the XML file to obtain the compiling parameters, and send the compiling parameters to the compiler.

8. The apparatus for development environment conversion according to Claim 5, 6, or 7, **characterized in that** the compiling parameters comprise: a compiling tool, a storage address of a dependency file, mutual relationship of dependency files, a name of an object file, and a storage address of the object file.
